Europäisches Patentamt

European Patent Office

Office européen des brevets

(19)

Publication number: **0 299 093**

**A1**

# EUROPEAN PATENT APPLICATION

(21) Application number: **87109896.8**

(22) Date of filing: **09.07.87**

(51) Int. Cl.4 **B60K 26/02**

(43) Date of publication of application:
**18.01.89 Bulletin 89/03**

(84) Designated Contracting States:
**AT BE CH DE ES FR GB GR IT LI LU NL SE**

(71) Applicant: **Wu, Chorng-Shing**
**21-1, Su Chin Village**
**Sei Lin Shiang Yunlin Hsien(TW)**

(72) Inventor: **Wu, Chorng-Shing**
**21-1, Su Chin Village**
**Sei Lin Shiang Yunlin Hsien(TW)**

(74) Representative: **LOUIS, PÖHLAU, LOHRENTZ & SEGETH**
**Kesslerplatz 1 Postfach 3055**
**D-8500 Nürnberg(DE)**

(54) An accelerator device for automobiles.

(57) This invention concerns a kind of accelerator device for automobiles. It provides an accelerator pole (1) that can be pressed by the driver's knee for accelerating speed. The driver can always put his her right foot on the brake pedal directly and presses it foreward if he needs to put on the brake without the necessity of moving his her foot from the accelerator pedal to brake pedal.

FIG.1

## AN ACCELERATOR DEVICE FOR AUTOMOBILES

### BACKGROUND OF THE INVENTION

The conventional operation for controlling car speed is managed by pedaling on the accelerator pedal or the brake pedal with the right foot. In other words, normal driving needs to step the right foot on the accelerator pedal continuously so as to keep the car running on. When the car has to be stopped in an emergency, the driver must move his right foot immediately from the accelerator pedal to the brake pedal. On the average it needs 0.75 second to move the right foot from the accelerator pedal to the brake pedal and even during such a short period of time, a car may keep going a distance of 18.75 meters at the speed rate of 90 km hr. Therefore, a lot of danger may happen in case of slow response in stepping the brake pedal. Moreover, a driver may step forcely on the accelerator pedal instead of the brake pedal to cause a more severe accident due to nervousness or absentmindedness of the driver.

### SUMMARY OF THE INVENTION

In order to solve the problems in the art mentioned above, the present invention has been worked out to provide an accelerator pole which is supported by a supporting axis fixed on a car body so that it can be pushed outward by the side of the driver's knee to accelerate the car speed. At the bottom end of the accelerator pole, an accelerator rope is connected with the throttle. In addition, the accelerator pole can be folded upwards so that the driver can get down the car easily.

### BRIEF DESCRIPTION OF THE DRAWINGS

Figure 1 is an explosive perspective of the accelerator device for automobiles in this invention.

Figure 2 is a view of the way this accelerator device is practically operated in this invention.

Figure 3 is a view of the way the brake pedal is practically operated in this invention.

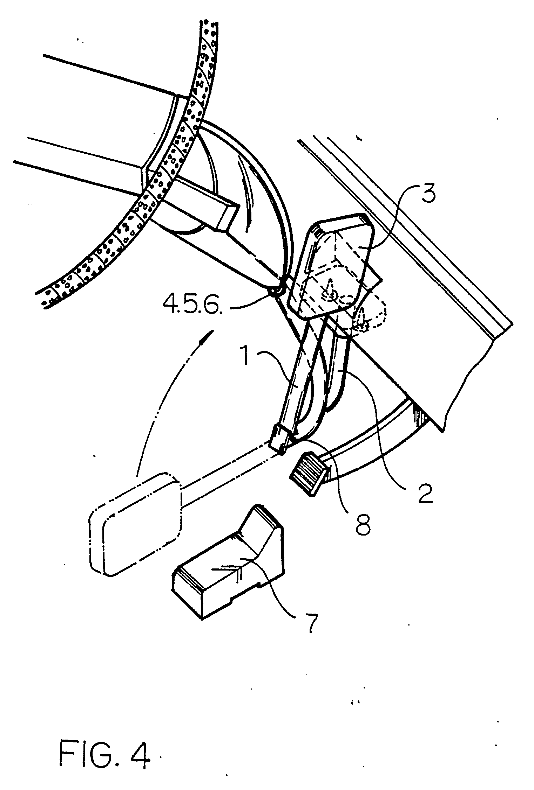

Figure 4 shows the acceleration pole is folded.

### DETAILED DESCRIPTION OF THE INVENTION

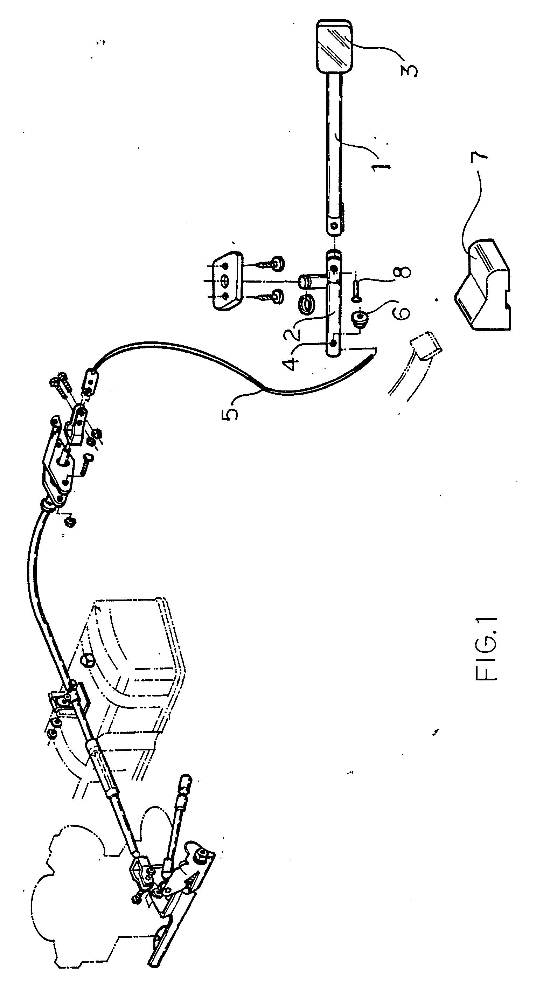

First of all, as shown in figure 1, this invention mainly includes an accelerator pole 1 which is supported by supporting axis 2 fixed on a car body. Accelerator pole 1 can rotate around with axis 2 as a pivot, and is set with board 3 at its top end for a driver to lean on it with the right side of his her right knee or the left side of his her left knee. Accelerator pole 1 is bended in an angle of about 75-90 and has at hole 4 at its bottom end for accelerator rope 5 to penetrate through and to be fixed up tightly by bolt 6. Therefore, when accelerator pole 1 is forced to move outwards, the accelerator rope 5 is to be pulled to widen the throttle for more gasoline.

Next, in order to push the brake pedal easily, in its front is placed cushion 7 which has a flat surface and an inclined surface of 40 upward. Then, a driver can put the outside of his her knee comfortably beside accelerator board 3 to push it and his her foot on the brake pedal. Of course, if the driver is tall enough to put his foot on the brake pedal, cushion 7 is not necessary.

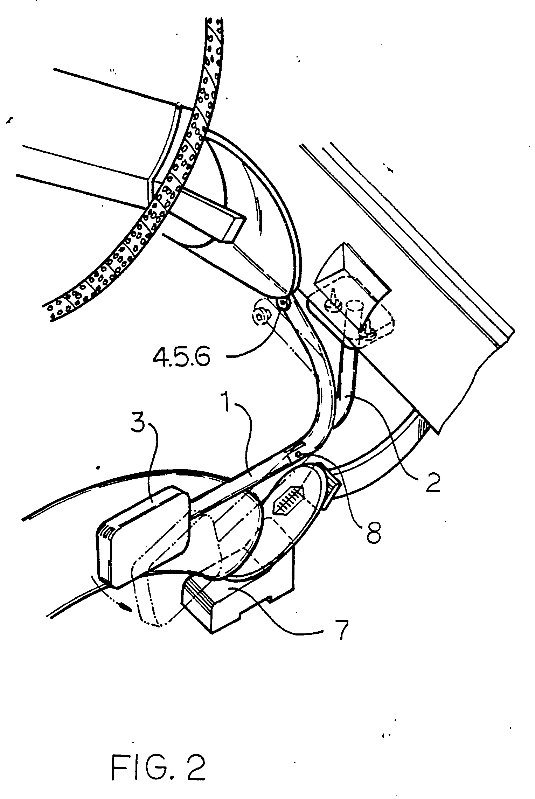

Figure 2 shows a normal driving condition. The driver leans the outside of his right knee on accelerator board 3 and pushes it outwards so that accelerator rope 5 is to be pulled to widen the throttle. Therefore, the car speed changes depending on the force given to the accelerator board 3. In addition, if the force given to accelerator pole 1 is released off, the throttle, the same as the known art, will automatically be turned into the minimum state by means of a spring to slow down the speed.

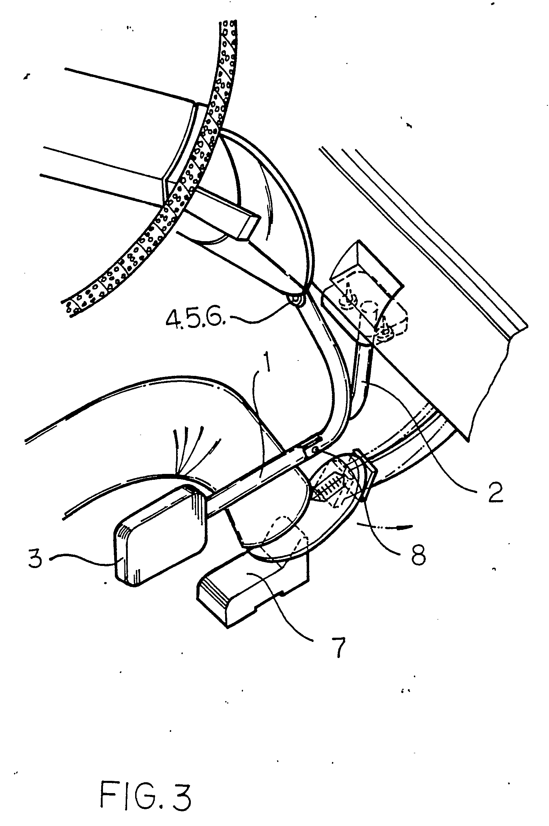

Figure 3 shows how the brake pedal is pressed by the foot in an emergency. According to human natural reaction, the driver's knee will naturally move inwards to release accelerator board 3 in the action of pressing the brake pedal, which means that the throttle is naturally forced to slow down the speed and braking can be effected immediately.

In addition, in order to make this invention available for right-side driving a connecting pin 8 is added to make the accelerator pole 1 foldable so that the driver can easily get down the car.

Based on human instinctive reaction, the foot would stretch straight when in an emergency. So it will be helpful for handling the brake pedal under such situation. Moreover, since the right foot is always stepping on the brake pedal, there cannot be dangerous time difference in moving the foot from the accelerator pedal to the brake pedal as a conventional car needs.

## Claims

1. An accelerator device for automobiles comprising,

an accelerator pole (1) that is supported by a supporting axis (2) fixed on the car body and has a board set (3) at its top end for a driver's knee to press outward and a hole (4) at its bottom end for linking with an accelerator rope (5) which is connected with the throttle for controlling the throttle to change the car speed and,

a cushion (7) for the drive to step on the brake pedal comfortably and properly.

2. An accelerator device for automobiles as claim in Claim 1, wherein said accelerator pole (1) is set with a connecting pin (8) so as to make it able to be folded upward for the driver's convenience in getting down the car.

FIG.1

EP 0 299 093 A1

FIG. 2

FIG.3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 602 491 (MONTROSE-OSTER) <br> * Page 5, lines 103-123 * | 1,2 | B 60 K 26/02 |
| X | US-A-2 224 276 (J. SALMEN) <br> * Whole document * | 1,2 | |
| X | US-A-1 809 021 (BUTLER) <br> * Whole document * | 1,2 | |
| X | US-A-2 221 274 (TAYLOR) <br> * Whole document * | 1,2 | |
| X | US-A-2 953 036 (WENDT) <br> * Page 1, column 2, lines 64-72 * | 1 | |
| A | US-A-2 136 980 (PIM) <br> * Page 2, claim 1; figure 1 * | 1 | |
| A | GB-A-1 043 767 (FORD) <br> * Page 2, lines 18-30; figure 1 * | 1 | |

TECHNICAL FIELDS SEARCHED (Int. Cl.4)

B 60 K
G 05 G

The present search report has been drawn up for all claims

| Place of search | Date of completion of the search | Examiner |
|---|---|---|
| THE HAGUE | 08-03-1988 | MENDE H. |